# EUROPÄISCHE PATENTSCHRIFT

(11) **EP 0 711 533 B1**
(45) Veröffentlichungstag und Bekanntmachung des Hinweises auf die Patenterteilung: **05.01.2000**
(21) Anmeldenummer: 95890177.9
(22) Anmeldetag: 09.10.1995
(51) Int. Cl.: A61C 8/00

(54) **Implantat**
Implant
Implant

(30) Priorität: 10.10.1994 AT 190894
(43) Veröffentlichungstag der Anmeldung: 15.05.1996
(73) Patentinhaber: MKE Metall- und Kunststoffwaren Erzeugungsgesellschaft m.b.H., 3860 Heidenreichstein (AT)
(72) Erfinder: Haas, Franz, A-1010 Wien (AT); Schneider, Rudolf, A-3860 Heidenreichstein (AT)
(74) Vertreter: Müllner, Erwin, Dr.

(56) Entgegenhaltungen:
- EP-A- 0 126 624
- EP-A- 0 323 823
- DE-A- 3 533 395
- US-A- 4 746 293
- US-A- 4 993 950
- US-A- 5 098 294

## Beschreibung

Die Erfindung betrifft ein Implantat wie aus EP-A-0 323 823 bekannt, zur Befestigung von Zahnprothesen, mit einem Primär- und einem Sekundärteil, wobei der Primärteil zur Verankerung im Kieferknochen vorgesehen ist und der die Suprakonstruktion tragende Sekundärteil in eine Ausnehmung des Primärteiles verdrehgesichert und in radialer Richtung mit Spiel einsetzbar ist, wobei mindestens ein O-Ring od.dgl. den radialen Abstand zwischen Primärteil und Sekundärteil elastisch überbrückt und in axialer Richtung des Sekundärteiles ein stirnseitig mit einer formschlüssigen Verbindung, insbesondere mit einem Schlitz in einem Kopf zum Ansetzen eines Schraubendrehers ausgebildeter Gewindebolzen vorgesehen ist.

Es sind Implantate bekannt, deren Sekundärteile durch ein begrenztes Spiel gegenüber den im Knochen sitzenden Primärteilen eine Beweglichkeit aufweisen, welche der natürlichen Zahnbeweglichkeit entspricht. Eine bekannte Ausführung sieht vor, daß auf einem in den Primärteil eingreifenden Zapfen des Sekundärteiles zwei O-Ringe in Ringnuten sitzen, die beim Ineinanderschieben der Teile in Ringnuten der Ausnehmung im Primärteil einrasten. Dies ermöglicht die oben erwähnte elastische Lagerung. Nachteilig wird bei dieser Ausführung empfunden, daß die gegenseitige Fixierung der Teile nur über die elastischen O-Ringe ohne speziell einstellbare Haltekräfte erfolgt. Ferner wurden die O-Ringe beim Einsetzen des Sekundärteiles beschädigt oder verschoben, sodaß eine Lagefixierung auf längere Dauer nicht gegeben war. Werden die Abmessungen so gewählt, daß die sich ergebenden Haltekräfte groß sind, dann ist ein späteres Abziehen des Sekundärteiles ohne Herausziehen des Primärteiles oft nicht möglich. Auch besteht die Gefahr, daß beim Zusammenstecken die O-Ringe aus ihrer Position verschoben werden. Letztlich ergeben sich bei der genannten Ausführungsform noch Abdichtungsprobleme zwischen dem Primär- und dem Sekundärteil.

Ferner ist bekannt, den O-Ring zusammen mit einem über eine Schraube verstellbaren Andruckring mit Kegelfläche zu verwenden. Dadurch kann die Haltekraft zwischen dem Sekundärteil und dem Primärteil sehr genau eingestellt werden. Dennoch ist das Zusammenhalten von Primär- und Sekundärteil vom Zustand des O-Ringes abhängig, sodaß in gewissen Zeiträumen ein Nachspannen zweckmäßig wäre, jedoch in der Praxis nicht durchführbar ist.

Die Erfindung zielt darauf ab, ein Zahnimplantat zu schaffen, das nicht nur ein seitliches Neigen der Suprakonstruktion, sondern auch eine gewisse axiale Verschiebung beim Biß entsprechend der natürlichen Beweglichkeit der Zähne ermöglicht. Ferner war es Aufgabe der Erfindung, die Haltekraft innerhalb des Implantates zu steigern, von einer Steckverbindung Abstand zu nehmen und eine dennoch leicht lösbare Konstruktion zu schaffen. Dies wird dadurch erreicht, daß der Gewindebolzen bis zu einem Anschlag in den Primärteil einschraubbar ist und der Kopf des Gewindebolzens mit seiner gewindeseitigen Anlagefläche an einem Absatz des Sekundärteiles zur Sicherung desselben gegen ein Herausfallen aus dem Primärteil anliegt, wobei sich der Sekundärteil über den O-Ring an dem Primärteil abstützt und der Sekundärteil radiales Spiel gegenüber dem Kopf und axiales Spiel von der Anlagefläche des Kopfes weg in Richtung eines Eindrückens des Sekundärteiles in den Primärteil aufweist. Somit wird der Sekundärteil an den Primärteil mit Spiel angeschraubt. Trotz festgezogener Schraube hat der Sekundärteil gegenüber dem Primärteil ein radiales und axiales Spiel, weil mit dem als Kopfschraube wirkenden Gewindebolzen der Sekundärteil nicht gegen den Primärteil festgezogen, sondern der Bolzen selbst festgeschraubt wird, der dann den Sekundärteil in seiner O-Ringlagerung gegenüber dem Primärteil trägt. Es ist zweckmäßig, wenn im Öffnungsbereich der Ausnehmung im Primärteil eine Kegelfläche vorgesehen ist und wenn der in den Primärteil einsetzbare Sekundärteil eine korrespondierende Kegelfläche aufweist und die Kegelflächen durch einen O-Ring od.dgl. im Abstand zueinander gehalten sind. So ergibt sich eine Zentrierung und seitliche Abstützung sowohl beim Biß als auch bei der schrägen Belastung eines Implantates.

Zur radialen und axialen Beweglichkeit des Sekundärteiles gegenüber dem Primärteil ist es zusätzlich zur gegenseitigen Freistellung vorteilhaft, wenn der O-Ring in je einer ringförmigen Ausnehmung sowohl des Primär- als auch des Sekundärteiles liegt, wobei der Primärteil eine radial orientierte, gegen die Öffnung des Primärteiles gerichtete Abstützfläche und der Sekundärteil eine entgegengerichtete Abstützfläche für den O-Ring aufweist. Die Ausnehmungen ergänzen einander zu einer Ringkammer, in der der O-Ring liegt. Je nach der Verschiebung des Sekundärteiles gegenüber dem Primärteil ergibt sich ein radialer und/oder axialer Druck auf den O-Ring, der durch die Seitenflächen oder Basisflächen der einander gegenüberliegenden ringförmigen Ausnehmungen übertragen wird. Zur Zentrierung des Sekundärteiles im Primärteil im belastungsfreien Zustand ist es zweckmäßig, wenn zur Aufrechterhaltung des Spiels in radialer und axialer Richtung zwischen dem Primärteil und dem eingesetzten Sekundärteil, wie bekannt, zwei im Abstand zueinander angeordnete O-Ringe vorgesehen sind. Die symmetrisch belasteten O-Ringe bewirken bloß die Abdichtung des für das gewünschte Bewegungsspiel notwendigen Spaltes und die gerade Ausgangsposition der Bauteile zueinander. Wie üblich, ist es zweckmäßig, ein Implantat mit einer Verdrehsicherung auszustatten. Es ist zweckmäßig, wenn zur Verdrehsicherung zwischen dem Primär- und dem Sekundärteil bei gleichzeitiger axialer Verschiebbarkeit in der Mantelfläche der Ausnehmung des Primärteiles axiale Nuten und im Bereich des in die Ausnehmung des Primärteiles eintauchenden Sekundärteiles Vorsprünge zum Eingriff in die axialen Nuten vorgesehen sind. Diese Verdrehsicherung läßt sowohl ein seitliches Auskippen als auch ein Einschieben in axialer Richtung beim Biß zu. Diese Verdrehsicherung ermöglicht es ferner, daß die gesamte Baueinheit aus Primär- und Sekundärteil mittels eines Schraubendrehers in den vorgebohrten Kieferknochen eingeschraubt werden kann. Der Primärteil trägt dazu ein selbstschneidendes Gewinde.

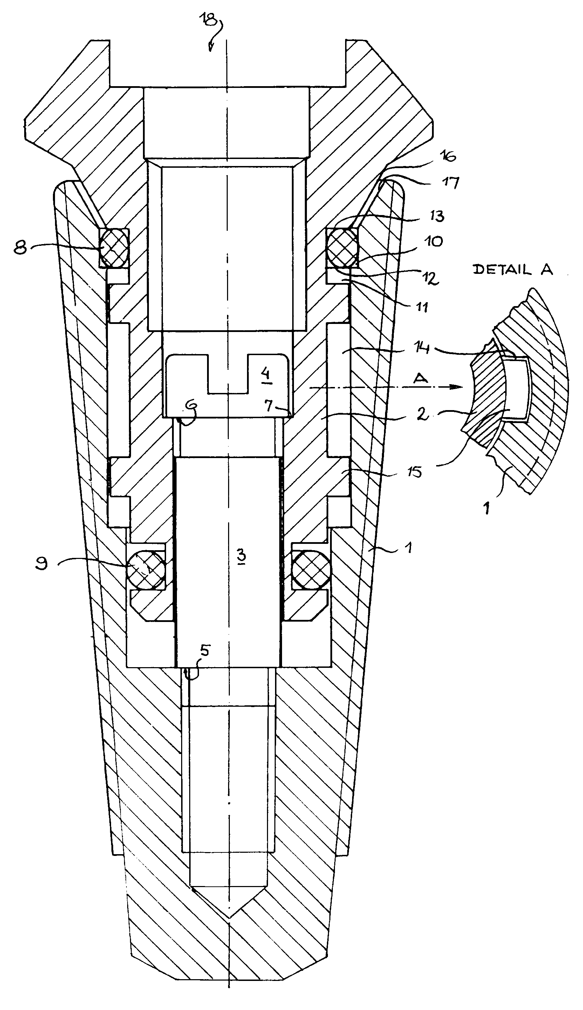

Ein Ausführungsbeispiel des Erfindungsgegenstandes ist in der Zeichnung dargestellt. Die Figur zeigt einen Querschnitt durch den Primärteil und den Sekundärteil eines Implantates sowie ein Detail nach der Linie A.

Ein Primärteil 1 ist als kegelförmige Schraube mit Außengewinde zum Einschrauben in einen vorgeschobenen Kieferknochen ausgebildet. Meist wird Titan als Werkstoff verwendet. Das Innere des Primärteiles 1 weist eine Bohrung auf, in welcher der Sekundärteil 2 mit Spiel gegenüber dem festsitzenden Primärteil 1 in axialer wie auch in radialer Richtung vorgesehen ist. Der Sekundärteil 2 wird von einem Gewindebolzen 3 mit Kopf 4 im Primärteil 1 gehalten. Dazu ist der Gewindebolzen 3 bis zu einem Anschlag 5 in den Primärteil 1 fest einschraubbar. Der Kopf 4 des im Primärteil 1 festsitzenden Gewindebolzens 3 liegt mit seiner gewindebolzenseitigen Anschlagfläche 6 an einem Absatz 7 des Sekundärteiles 2 an, der selbst nur über einen O-Ring 8 und einen O-Ring 9 am Primärteil 1 abgestützt ist.

Der O-Ring 8 liegt innerhalb einer von zwei Ausnehmungen 10, 11 gebildeten ringförmigen Kammer, nämlich innerhalb einer Ausnehmung 10 im Primärteil 1 und einer Ausnehmung 11 im Sekundärteil 2, und stützt sich an den radialen Flächen 12 und 13 der genannten Ausnehmungen 10, 11 bei einer zentrischen, wie auch bei einer außermittigen, schrägen Belastung ab. Der O-Ring 9 dient der Parallelführung. Zum Zwecke der Verdrehsicheurng sind in der Bohrungswand des Primärteiles 1 ein oder mehrere axiale Nuten 14, z.B. diametral oder mehrfach sternförmig einander gegenüberliegend angeordnet, in welche Vorsprünge 15 des Sekundärteiles 2 eingreifen. Da die Nuten 14 länger als die Vorsprünge 15 sind, kann der Sekundärteil 2 innerhalb des Primärteiles 1 verschoben, jedoch nicht verdreht werden. Die Vorsprünge 15 erreichen mit ihren Stirnflächen den Grund der Nuten 14 nicht, haben also ein radiales Spiel in den Nuten 14, sodaß zusätzlich zur axialen Verschiebung auch eine Schrägstellung des Sekundärteiles 2 im Primärteil 1 möglich ist.

Bei rein axialem Druck wird der Sekundärteil 2 in den Primärteil 1 eingeschoben, wobei der O-Ring 8 gequetscht wird, bis eine am Sekundärteil 2 vorgesehene Kegelfläche 16 an einer Kegelfläche 17 des Primärteiles 1 anliegt. Bei schräger Belastung ergibt sich dadurch eine Zentrierung. Auch werden Speisereste bzw. Beläge aller Art aus dem Zwischenraum herausgedrückt. Eine Schrägstellung des Sekundärteiles 2 im Primärteil 1 ist möglich, weil die ineinandergreifenden Bauteile mit Spiel aneinander geführt sind und durch den Gewindebolzen 3 mit Kopf 4 nicht fest und damit spielfrei aneindergeschraubt werden, sondern trotz festgezogenem Gewindebolzen 3 im Abstand des vom O-Ring 8 überbrückten Spiels zueianderliegen.

Das Implantat wird mit bereits zusammengesetztem Primärund Sekundärteil 1, 2 in den vorgebohrten Kieferknochen eingeschraubt. Dazu hat der Sekundärteil 2, durch dessen zentrale Bohrung der Kopf 4 des Gewindebolzens 3 mit einem Schraubendreher erreichbar ist, in seinem Anschlußstück eine Formschlußverbindung, insbesondere einen Schlitz 18 zum Ansetzen eines Werkzeuges. Da der Sekundärteil 2 mit dem Primärteil 1 drehfest durch die Vorsprünge 15, welche in die Nuten 14 eingreifen, verbunden ist, wird die gesamte Baugruppe mit Hilfe des genannten Werkzeuges gedreht und somit eingeschraubt.

Der Sekundärteil 2 ist in seiner zentralen Bohrung mit einem Gewinde ausgestattet. In der Phase des Einwachsens des Primärteiles 1 mit bereits eingesetztem Sekundärteil 2 wird in die genannte Bohrung eine Gewindekappe eingeschraubt und damit die Öffnung verschlossen. Ist das Implantat gut eingewachsen, also z.B. nach etwa drei Monaten, dann wird die Gewindekappe abgeschraubt und mit dem Aufbau der Suprakonstruktion, also des sichtbaren Zahnbereiches kann begonnen werden.

## Patentansprüche

1. Implantat zur Befestigung von Zahnprothesen mit einem Primär (1)- und einem Sekundärteil (2), wobei der Primärteil (1) zur Verankerung im Kieferknochen vorgesehen ist und der die Suprakonstruktion tragende Sekundärteil (2) in eine Ausnehmung des Primärteiles verdrehgesichert und in radialer Richtung mit Spiel einsetzbar ist, wobei mindestens ein O-Ring (8, 9) od.dgl. den radialen Abstand zwischen Primärteil (1) und Sekundärteil (2) elastisch überbrückt und in axialer Richtung des Sekundärteiles (2) ein stirnseitig mit einer formschlüssigen Verbindung, insbesondere mit einem Schlitz in einem Kopf zum Ansetzen eines Schraubendrehers ausgebildeter Gewindebolzen (3) vorgesehen ist, **dadurch gekennzeichnet**, daß der Gewindebolzen (3) bis zu einem Anschlag (5) in den Primärteil (1) einschraubbar ist und der Kopf (4) des Gewindebolzens (3) mit seiner gewindeseitigen Anlagefläche (6) an einem Absatz (7) des Sekundärteiles (2) zur Sicherung desselben gegen ein Herausfallen aus dem Primärteil anliegt, wobei sich der Sekundärteil (2) über den O-Ring (8) an dem Primärteil (1) abstützt und der Sekundärteil (2) radiales Spiel gegenüber dem Kopf (4) und axiales Spiel von der Anlagefläche (6) des Kopfes (4) weg in Richtung eines Eindrückens des Sekundärteiles (2) in den Primärteil (1) aufweist.

2. Implantat nach Anspruch 1, **dadurch gekennzeichnet**, daß im Öffnungsbereich der Ausnehmung im Primärteil (1) eine Kegelfläche (17) vorgesehen ist und daß der in den Primärteil (1) einsetzbare Sekundärteil (2) eine korrespondierende Kegelfläche (16) aufweist und die Kegelflächen (16, 17) durch einen O-Ring (8) od.dgl. im Abstand zueinander gehalten sind.

3. Implantat nach Anspruch 2, **dadurch gekennzeichnet**, daß der O-Ring (8) in je einer Ausnehmung (10, 11) sowohl des Primär-als auch des Sekundärteiles (1, 2) liegt, wobei der Primärteil (1) eine radial orientierte, gegen die Öffnung des Primärteiles (1) gerichtete Abstützfläche (12) und der Sekundärteil (2) eine entgegengerichtete Abstützfläche (13) für den O-Ring (8) aufweist.

4. Implantat nach einem der Ansprüche 1 bis 3, **dadurch gekennzeichnet**, daß zur Aufrechterhaltung des Spiels in radialer und axialer Richtung zwischen dem Primärteil (1) und dem eingesetzten Sekundärteil (2), wie bekannt, zwei im Abstand zueinander angeordnete O-Ringe (8, 9) vorgesehen sind.

5. Implantat nach einem der Ansprüche 1 bis 4, **dadurch gekennzeichnet**, daß zur Verdrehsicherung zwischen dem Primär-und dem Sekundärteil (1, 2) bei gleichzeitiger axialer Verschiebbarkeit in der Mantelfläche der Ausnehmung des Primärteiles (1) axiale Nuten (14) und im Bereich des in die Ausnehmung des Primärteiles (1) eintauchenden Sekundärteiles (2) Vorsprünge (15) zum Eingriff in die axialen Nuten vorgesehen sind.

## Claims

1. Implant for the attachment of dental prostheses with a primary portion (1) and a secondary portion (2), wherein the primary portion (1) is provided for anchorage in the jawbone and the secondary portion (2) which carries the superstructure is insertable with play in a radial direction and so as to prevent turning in a recess of the primary portion, wherein at least one O-ring (8, 9) or the like elastically bridges the radial gap between primary portion (1) and secondary portion (2), and in the axial direction of the secondary portion (2) is provided a threaded bolt (3) constructed at the end with a form-locking connection, in particular with a slot in a head for the application of a screwdriver, characterised in that the threaded bolt (3) is screwable into the primary portion (1) as far as a stop (5), and the head (4) of the threaded bolt (3) abuts by its contact face (6) on the thread side against a shoulder (7) of the secondary portion (2) to prevent it from falling out of the primary portion, wherein the secondary portion (2) is supported by the O-ring (8) on the primary portion (1) and the secondary portion (2) exhibits radial play relative to the head (4) and axial play away from the contact face (6) of the head (4) in the direction of pressing the secondary portion (2) into the primary portion (1).

2. Implant according to claim 1, characterised in that a cone surface (17) is provided in the opening region of the recess in the primary portion (1) and in that the secondary portion (2) which is insertable in the primary portion (1) has a mating cone surface (16) and the cone surfaces (16, 17) are held at a distance from each other by an O-ring (8) or the like.

3. Implant according to claim 2, characterised in that the O-ring (8) lies in a recess (10, 11) of each of both the primary and secondary portions (1, 2), wherein the primary portion (1) has a radially oriented support surface (12) directed towards the opening of the primary portion (1) and the secondary portion (2) has an oppositely directed support surface (13) for the O-ring (8).

4. Implant according to any one of claims 1 to 3, characterized in that, to maintain the play in radial and axial directions between the primary portion (1) and the inserted secondary portion (2), as is known, two spaced-apart O-rings (8, 9) are provided.

5. Implant according to any one of claims 1 to 4, characterized in that, to prevent turning between the primary and secondary portions (1, 2), at the same time with an axial sliding capacity, in the peripheral surface of the recess of the primary portion (1) are provided axial grooves (14), and in the region of the secondary portion (2) entering the recess of the primary portion (1) are provided projections (15) for engagement in the axial grooves.

## Revendications

1. Implant pour fixer des prothèses dentaires, comprenant une partie primaire (1) et une partie secondaire (2), la partie primaire (1) étant prévue pour l'encrage dans l'os maxillaire et la partie secondaire (2) portant la superstructure étant susceptible d'être insérée dans une cavité de la partie primaire en étant bloquée en rotation, et avec du jeu dans la direction radiale, au moins un joint torique (8, 9) ou similaire recouvrant de façon élastique l'écartement radial entre la partie primaire (1) et la partie secondaire, et dans la direction axiale de la partie secondaire (2), étant prévu un boulon fileté réalisé avec, du côté frontal, une liaison à ajustement de forme, en particulier une fente ménagée dans une tête pour l'insertion d'un tournevis, caractérisé en ce que le boulon fileté (3) est susceptible d'être vissé jusqu'à une butée (5) dans la partie primaire (1), en ce que la tête (4) du boulon fileté (3) est en appui par sa surface d'appui (6), du côté fileté, sur un lamage ou fraisage frontal en creux (7) de la partie secondaire (2) pour empêcher celle-ci de tomber hors de la partie primaire, et en ce que la partie secondaire (2) s'appuie sur la partie primaire (1) via le joint torique (8) et la partie secondaire (2) présente du jeu radial par rapport à la tête (4) et du jeu axial à partir de la surface d'appui (6) de la tête (4) dans la direction du pressage vers l'intérieur de la partie secondaire (2) dans la partie primaire (1).

2. Implant selon la revendication 1, caractérisé en ce que, dans la zone d'ouverture de la cavité dans la partie primaire (1), est prévue une surface conique (17), en ce que la partie secondaire (2) susceptible d'être insérée dans la partie primaire (1) comporte une surface conique correspondante (16), et en ce que les surfaces coniques (16, 17) sont maintenues à distance l'une de l'autre par un joint torique (8) ou similaire.

3. Implant selon la revendication 2, caractérisé en ce que le joint torique (8) est disposé dans chacune des cavités (10, 11) aussi bien de la partie primaire (1) qu'également de la partie secondaire (2), et en ce que la partie primaire (1) comporte une surface d'appui (12) orientée radialement et dirigée en face de l'ouverture de la partie primaire (1) et la surface secondaire (2) comporte une surface d'appui (13) dirigée dans la direction opposée pour le joint torique d'étanchéité (8).

4. Implant selon l'une des revendications 1 à 3, caractérisé en ce que, pour maintenir le jeu dans la direction radiale et dans la direction axiale entre la partie primaire (1) et la partie secondaire (2) montée, sont prévus, de façon connue en soi, deux joints toriques (8, 9) disposés à distance l'un de l'autre.

5. Implant selon l'une des revendications 1 à 4, caractérisé en ce que, pour le blocage en rotation entre la partie primaire (1) et la partie secondaire (2) en permettant en même temps un coulissement axial dans la surface d'enveloppe de la cavité de la partie primaire (1), sont prévues des rainures axiales (14) et, dans la zone de la partie secondaire (2) plongeant dans la cavité de la partie primaire (1), des saillies (15) destinées à s'engager dans les rainures axiales.
